# EUROPEAN PATENT APPLICATION

(11) **EP 4 647 242 A1**
(43) Date of publication of application: **12.11.2025**
(21) Application number: 24174337.6
(22) Date of filing: 06.05.2024
(51) Int. Cl.: B29C 64/118, B29C 64/321, B29C 64/336, B29C 64/393, B33Y 10/00, B33Y 40/00, B33Y 50/02

(54) **AN ADDITIVE MANUFACTURING SYSTEM**

(71) Applicant: CREATE IT REAL A/S, 9000 Aalborg (DK)
(72) Inventor: GAY, Jeremie Pierre, 9000 Aalborg (DK); JENSEN, Henrik, 9000 Aalborg (DK); RØJKJÆR-JENSEN, Lukas, 9000 Aalborg (DK)
(74) Representative: Inspicos P/S

(57) **Abstract**

The invention relates to an additive manufacturing system comprising: a printhead (2); an extruder motor (3); an auxiliary motor (4); and a system controlling arrangement (8). The additive manufacturing system further comprises: a filament accumulation sensing arrangement (9) configured to detect accumulation of the filament (6) along a feeding path between the auxiliary motor and the extruder motor. The system controlling arrangement is configured to: operate the additive manufacturing system in a first operational state in which the extruder motor is controlled at an initial extruder motor speed and the auxiliary motor is controlled at an initial auxiliary motor speed; detect the accumulation of the filament via an accumulation signal from the sensing arrangement; and switch from the first operational state to a second operational state in which: the extruder motor is controlled at an increased extruder motor speed; and/or the auxiliary motor is controlled at a decreased auxiliary motor speed.

## Description

### FIELD OF THE INVENTION

The present invention relates to an additive manufacturing system for fused deposition modelling. The invention further relates to a method for additively manufacturing at least a part of an object by fused deposition modelling.

### BACKGROUND OF THE INVENTION

Additive manufacturing, also referred to as 3D printing, enables rapid prototyping and the ability of producing complex shapes and geometries. For example, 3D printing enables straightforward manufacturing of articles with unique shapes or properties.

In fused deposition modelling, filament is typically fed to a printhead by means of an extruder motor arranged to translate the filament to the printhead. Some systems further comprise an additional motor also arranged to translate the filament in series with the extruder motor. This can in particular be relevant for larger systems and/or systems intended for utilizing an elastic filament.

Such systems can however be prone to various issues, such as inefficient feeding of filament to the printhead, jamming of the filament, or filament between the motors unintentionally engaging with parts of the system.

The risk of such problems may tend to grow larger during the printing process, and are thereby particularly relevant for large prints.

There is a need for solutions which address these issues arising in additive manufacturing systems for fused deposition modelling comprising serially connected motors for translating filament.

### SUMMARY OF THE INVENTION

On the above background, it is an object of preferred embodiments of the invention to provide an additive manufacturing system which reduces the risk of inefficient feeding of filament to the printhead, jamming of the filament, filament between the motors unintentionally engaging with parts of the system, or any combination thereof.

A first aspect of the present disclosure relates to an additive manufacturing system for fused deposition modelling, the system comprising:
a printhead for heating and depositing filament;
an extruder motor arranged to translate the filament;
an auxiliary motor arranged to translate the filament;
a feeding path for the filament, the feeding path having a feeding direction towards the printhead, wherein the feeding path is at least formed by the extruder motor and the auxiliary motor such that the extruder motor is closer to the printhead than the auxiliary motor relative to the feeding direction of the feeding path; and
a system controlling arrangement configured to control the extruder motor and the auxiliary motor to translate the filament towards the printhead during operation of the additive manufacturing system,

wherein the additive manufacturing system further comprises:
   a filament accumulation sensing arrangement configured to detect accumulation of the filament along the feeding path between the auxiliary motor and the extruder motor, wherein the sensing arrangement is configured to transmit an accumulation signal to the system controlling arrangement,
wherein the system controlling arrangement is further configured to:
   operate the additive manufacturing system in a first operational state to at least partly manufacture an object, wherein the extruder motor is controlled at an initial extruder motor speed and the auxiliary motor is controlled at an initial auxiliary motor speed in the first operational state;
   detect the accumulation of the filament via the accumulation signal during operation of the system in the first operational state; and
   switch from the first operational state to a second operational state upon detecting the accumulation of the filament via the accumulation signal, wherein, in the second operational state:
      the extruder motor is controlled at an increased extruder motor speed greater than the initial extruder motor speed; and/or
      the auxiliary motor is controlled at a decreased auxiliary motor speed smaller than the initial auxiliary motor speed.

The inventors of the present invention have identified that the above-identified problems of inefficient feeding of filament to the printhead, jamming of the filament, and filament between the motors unintentionally engaging with parts of the system may arise due to filament building up between the extruder motor and the auxiliary motor.

These issues appear to be prominent for prints which takes a long time to print, since such prints allow more filament to build up between the two motors. Further, these issues also appear to be prominent when using filament which are relatively elastic. The elasticity of filament may be quantified in terms of a Shore hardness, a material, a thickness, or a combination thereof.

A possible origin of filament building up is that the extruder motor is not capable of perfectly extruding all filament through the printhead at the intended pace. Given that the extruder motor and the auxiliary motor typically operate at synchronized speeds, filament must necessarily build up between the two motors if the filament is not efficiently translated by the extruder motor.

Moreover, the inventors of the present invention have identified that a filament accumulation sensing arrangement configured to detect accumulation of the filament and a system controlling arrangement configured to respond by increasing extruder motor speed or decreasing the auxiliary motor speed can efficiently address this issue.

Correspondingly, some examples of the present disclosure can reduce the risk of inefficient feeding of filament to the printhead, jamming of the filament, filament between the motors unintentionally engaging with parts of the system, or any combination thereof. These problems can be particularly relevant to address in large systems, for prints which takes a long time to print, and/or when using elastic filament. However, the solutions offered herein may in principle be used in any additive manufacturing system for fused deposition modelling.

Several applicable solutions for implementing a filament accumulation sensing arrangement are available. A preferable solution is to employ a filament displacement sensor configured to measure the transverse displacement at a position along the feeding path between the auxiliary motor and the extruder motor. In practice, such a sensor may be a mechanical sensor, such as a push-button or a lever sensor, an optical sensor, or a proximity sensor. However, any sensing arrangement capable of detecting accumulation of filament along the feeding path may be used. Solutions within the scope of the present disclosure can thereby also detect accumulation indirectly, for example by detecting a discrepancy of translation of filament between two locations along the feeding path, or by detecting a reduction of tension in the filament along the feeding path.

Although the examples of the present disclosure can both be implemented by an increased extruder motor speed or by a decreased auxiliary motor speed (or by a combination thereof), preferable solutions typically utilize a decreased auxiliary motor speed. Increasing extruder motor speed will affect the rate at which melted filament is deposited by the printhead, and the motion of the printhead thereby has to be adjusted to ensure that the quality of the printed object is not compromised. Such adjustments are possible and within the scope of the present disclosure. However, it is generally more straightforward to decrease the auxiliary motor speed instead of implementing such adjustments, and accordingly, this solution is preferable. Furthermore, the extruder motor may already be operated at a maximum speed in the first operational state, for example with respect to the rate at which the printhead can melt filament.

The increased extruder motor speed and the decreased auxiliary motor speed may be temporary, permanent, or consecutively adjusted.

According to examples of the present disclosure, the accumulation of the filament detected by the sensing arrangement is associated with a transverse displacement of the filament, the transverse displacement being transverse to the feeding path.

According to examples of the present disclosure, the sensing arrangement is:
a filament displacement sensor configured to measure the transverse displacement at a position along the feeding path between the auxiliary motor and the extruder motor;
a tension meter configured to detect the accumulation of the filament along the feeding path by measuring a reduction of a tension in the filament along the feeding path; or
a translation sensing arrangement configured to detect a discrepancy of translation of the filament between two locations along the feeding path.

The translation sensing arrangement may for example comprise one or more flow sensors, such as a first flow sensor and a second flow sensor, each configured to detect a local translation of the filament along the feeding path, wherein the discrepancy of translation of the filament is detected based on a discrepancy between such local translations. For example, the second flow sensor is located downstream of the first flow sensor along the feeding path relative to the feeding direction, wherein the discrepancy of translation of the filament is detected based on measuring that a flow (or a cumulative flow) is greater at the first flow sensor than at the second flow sensor. The first flow sensor may be arranged at the extruder motor and the second flow sensor may be arranged at the auxiliary motor. Flow sensors may alternatively be integrated in the motors.

A tension meter may for example use three rollers where the filament travels through the rollers causing deflection of the center roller, which deflection is then converted to the accumulation signal, for example via a load cell.

According to examples of the present disclosure, the filament displacement sensor is:
a mechanical sensor, such as a push-button or a lever sensor;
an optical sensor;
a proximity sensor; or
a combination thereof.

A mechanical sensor may be based on mechanical displacement, for example displacement of a button or a lever.

An optical sensor may be based on detecting that a quantity of light received by a photodetector changes, for example based on whether a filament obstructs or otherwise affects light received by a photodetector.

A proximity sensor is able to detect the presence of nearby objects without physical contact, for example by detecting changes in a signal from electromagnetic radiation emitted by the sensor.

According to examples of the present disclosure, the system comprises at least one filament tube forming an internal passageway extending in a lengthwise direction for accommodating the filament, the internal passageway defining at least a part of the feeding path.

The provision of a filament tube may compliment the filament accumulation sensing arrangement. For example, a filament tube may ensure that a transversal displacement of the filament is localized at, e.g., the position of a filament displacement sensor.

According to examples of the present disclosure, the tube forms a first section and a second section, wherein the second section is arranged to facilitate the transverse displacement by having a gap in the tube, a cavity in the tube, or a greater cross-sectional diameter than the first section, wherein the filament displacement sensor is placed in the second section.

A gap in the tube, a cavity in the tube, or a local greater cross-sectional diameter of the tube may ensure that transversal displacement of filament primarily occurs at a specific portion along the feeding path for the filament.

According to examples of the present disclosure, the second section comprises a protruding element protruding partially into the internal passageway from a perimeter of the tube, the protruding element arranged to locally deflect the filament within the internal passageway to thereby promote the accumulation of the filament into a transverse displacement at the protruding element, wherein the displacement sensor is located at the protruding element.

The protruding element can for example be a fixed element such as an internal bulge of the filament tube, or a movable element such as a roller or a bearing positioned inside the filament tube.

Such a protruding element may ensure that transversal displacement of filament primarily occurs at a specific portion along the feeding path for the filament.

According to examples of the present disclosure, the filament displacement sensor is arranged outside the tube to measure the transverse displacement of a section of the filament being outside the tube.

According to examples of the present disclosure, the controlling arrangement is further configured to:
adjust operation by decreasing the increased extruder motor speed, and/or by increasing the decreased auxiliary motor speed, wherein the operation is adjusted based on:
detecting a reduction of or a termination of the accumulation of the filament via the accumulation signal; and/or
a pre-set duration of the second operational state.

The provision of a pre-set duration after which the increased extruder motor speed is decreased and/or the decreased auxiliary motor speed is increased constitutes a simple and efficient implementation of a regulation of an additive manufacturing system. The pre-set duration may, for example, be in the range from 1 second to 20 seconds.

Another simple implementation of a regulation is to rely on the accumulation signal of the filament accumulation sensing arrangement, thereby implementing a feedback loop. Such a feedback loop may, for example, be a simple binary loop which switches between two fixed operational states based on whether or not accumulation of the filament has been detected, or it may be a more complicated feedback scheme, for example relying on proportional (P), integral (I), and/or derivative (D) control based on a magnitude of accumulation of the filament.

According to examples of the present disclosure, the controlling arrangement is further configured to adjust operation by decreasing the increased extruder motor speed, and/or by increasing the decreased auxiliary motor speed to revert from the second operational state to the first operational state.

According to examples of the present disclosure, the accumulation signal is measured successively to consecutively adjust operation of the increased extruder motor speed and/or adjust operation of the decreased auxiliary motor speed.

Such functionality may be implemented as feedback control loop mechanism, such as P, PD, PI, or PID control.

As an example, the filament accumulation sensing arrangement is a translation sensing arrangement comprising a first and a second flow sensor, with the second flow sensor is located downstream of the first flow sensor along the feeding path relative to the feeding direction, wherein the difference between the flow measured by the first flow sensor and the second flow sensor is used as an error signal, and the speed of the auxiliary motor is controlled to reduce this error signal based on a correction being proportional with the error according to the known principles of P, PD, PI, or PID control.

According to examples of the present disclosure, the feeding path is a first feeding path, wherein the system further comprises:
a second feeding path formed at least by the extruder motor, the second feeding path having a feeding direction towards the printhead, wherein the first feeding path and the second feeding path are arranged to facilitate feeding of filament to the printhead from different filament sources, wherein the first feeding path and the second feeding path merge in a merging point prior to the extruder motor.

Since the concept of the present disclosure is particularly relevant for large prints, the solutions presented herein apply particularly well to systems intended for printing using different filament sources having different feeding paths merging at a merging point.

Considering such systems, the auxiliary motor, which may be controlled at a decreased auxiliary motor speed upon detection accumulation of the filament, can either be placed before or after the merging point. In either case, each feeding path may require a separate motor for feeding filament. The auxiliary motor may typically either be one such motor (placed before the merging point), or it may be placed after the merging point to receive filament translated by one of these motors.

According to examples of the present disclosure, the displacement sensor or the tension meter is located after the merging point relative to the feeding direction of the first feeding path and the feeding direction of the second feeding path.

Hence, only one accumulation sensing arrangement may be needed even though different filament sources can be used.

According to examples of the present disclosure, the controlling arrangement is further configured to:
detect a termination of filament supply via the first feeding path and to initiate filament feeding via the second feeding path based on said termination of filament supply via the first feeding path.

According to examples of the present disclosure, the controlling arrangement is further configured to:
detect a discrepancy of translation of the filament between a first location and a second location along the first feeding path arising from a lack of filament at the first location, the first location being before the second location relative to the feeding direction along the first feeding path; and
temporarily translate filament along the second feeding path with a translation speed greater than a translation speed of the extruder motor for a duration which is based on the discrepancy of translation detected from the lack of filament at the first location.

When filament from a first source runs out and filament from a second source is fed as a response, a gap between the filament from the first source and the filament from the second source may be present.

By temporarily translating the filament along the second feeding path with a translation speed greater than a translation speed of the extruder motor for a duration which is based on a discrepancy of translation, it is possible to compensate for this gap between filaments from the first and second sources.

The duration and/or magnitude of greater translation may be determined based on the duration of the detected lack of filament at the first location and on the motor speed of the extruder motor.

While the filament from the second source is translated along the second feed path at a temporarily increased translation speed, the filament from the first source may still be fed towards the printhead. The duration of the temporarily increased translation speed along the second feeding path may take into account this further translation of filament along the first feeding path.

According to examples of the present disclosure, the system comprises at least one presence sensor arranged to measure a presence of filament along the first feeding path, wherein the termination of filament supply via the first feeding path is detected via the presence sensor.

Optionally, a presence sensor may be part of the filament accumulation sensing arrangement. For example, a flow sensor may detect whether any flow of filament is present at all, or a partially displaced mechanical sensor may be indicative that filament is present. According to examples of the present disclosure, the presence sensor is arranged before the merging point relative to the feeding direction of the first feeding path.

By having the presence sensor prior to the merging point, the lack of filament can be detected as early as possible.

According to examples of the present disclosure, the second feeding path is further formed by at least the auxiliary motor, wherein the first feeding path and the second feeding path merge in the merging point prior to the extruder motor.

In such examples, each feeding path may further comprise a separate motor for feeding filament to the auxiliary motor.

According to examples of the present disclosure, the auxiliary motor is a first auxiliary motor, wherein the system further comprises:
a second auxiliary motor arranged to translate the filament, wherein the second feeding path is further formed by at least the second auxiliary motor such that the extruder motor is closer to the printhead than the second auxiliary motor relative to the feeding direction of the second feeding path, wherein the second auxiliary motor is located prior to the merging point relative to the feeding direction of the second feeding path.

According to examples of the present disclosure, the controlling arrangement is further configured to:
operate the additive manufacturing system in a third state of operation, wherein the extruder motor is controlled at the initial extruder motor speed and the second auxiliary motor is controlled at a second initial auxiliary motor speed; and
switch from the third operational state to a fourth operational state upon detecting the accumulation of the filament via the accumulation signal, wherein, in the fourth operational state:
   the extruder motor is controlled at the increased extruder motor speed greater than the initial extruder motor speed; and/or
   the second auxiliary motor is controlled at a second decreased auxiliary motor speed smaller than the second initial auxiliary motor speed.

The second initial auxiliary speed may correspond to a speed of the first auxiliary motor at the point in time when the controller switches to the third state of operation. The second initial auxiliary motor speed may correspond to the initial auxiliary motor speed of the first auxiliary motor (i.e., the first initial auxiliary motor speed).

According to examples of the present disclosure, the additive manufacturing system comprises a filament spool holding the filament and from which the filament is fed to the feeding path.

According to examples of the present disclosure, the filament has a hardness of at most 110A on the Shore hardness scale, for example at most 100A, such as at most 95A.

The filament may have a thickness/diameter of at most 2.50 mm, for example the range from 1.00 mm to 2.50 mm, for example in the range from 1.20 mm to 2.30 mm, for example in the range from 1.40 mm to 2.10 mm, such as 1.75 mm.

According to examples of the present disclosure, the filament is thermoplastic polyurethane.

A filament of thermoplastic polyurethane having a hardness as exemplified above and/or a thickness as exemplified above may, in the context of the present disclosure, be considered as elastic. Accordingly, examples of the present disclosure are particularly well suited to operate using such filament.

According to examples of the present disclosure, the object is a seat or a backrest for a person.

According to examples of the present disclosure, the object has mass of at least 1.0 kg after being printed, for example of at least 1.5 kg, such as of at least 2.0 kg.

According to examples of the present disclosure, the system comprises a printing bed, wherein the object has a cross-sectional area of at least 0.10 square meter, for example at least 0.15 square meters, such as at least 0.20 square meters.

Generally, the concepts of the present disclosure may particularly compliment large prints. Large prints may be quantified in terms of weight, or in terms of a cross-sectional area, for example a cross-sectional area on a printing bed of the additive manufacturing system. Examples of large prints are a seat or a backrest for a person.

According to examples of the present disclosure, the system controlling arrangement comprises:
a printer controller configured to control the printhead and the extruder motor; and
an auxiliary feeding controller configured to control the auxiliary motor.

The printer controller may thus be configured to control the elements related to conventional fused deposition modelling, for example, relative motion (x, y, and z) of the printhead, and feeding of the filament to the printhead via the extruder motor.

The auxiliary feeding controller may be an auxiliary feeding controller as disclosed herein in relation to the third aspect. The auxiliary feeding controller may communicate with the printer controller, and may e.g., receive information regarding position and/or speed of the extruder motor. The auxiliary feeding controller may e.g., receive a number of steps transmitted for controlling the extruder motor if the extruder motor is a step motor.

A second aspect of the present disclosure relates to a method for additively manufacturing at least a part of an object by fused deposition modelling using an additive manufacturing system, the system comprising:
a printhead for heating and depositing filament;
an extruder motor arranged to translate the filament;
an auxiliary motor arranged to translate the filament;
a feeding path for the filament, the feeding path having a feeding direction towards the printhead, wherein the feeding path is at least formed by the extruder motor and the auxiliary motor such that the extruder motor is closer to the printhead than the auxiliary motor relative to the feeding direction of the feeding path;
a system controlling arrangement configured to control the extruder motor and the auxiliary motor to translate the filament towards the printhead during operation of the additive manufacturing system; and
a filament accumulation sensing arrangement configured to detect accumulation of the filament along the feeding path between the auxiliary motor and the extruder motor, wherein the sensing arrangement is configured to transmit an accumulation signal to the system controlling arrangement,
wherein the method comprises the steps of:
operating the additive manufacturing system in a first operational state to at least partly manufacture the object, wherein the extruder motor is controlled at an initial extruder motor speed and the auxiliary motor is controlled at an initial auxiliary motor speed in the first operational state;
detecting the accumulation of the filament via the accumulation signal during the operation of the system in the first operational state; and
switch operation of the additive manufacturing system from the first operational state to a second operational state upon detecting the accumulation of the filament via the accumulation signal, wherein, in the second operational state:
   the extruder motor is controlled at an increased extruder motor speed greater than the initial extruder motor speed; and/or
   the auxiliary motor is controlled at a reduced auxiliary motor speed smaller than the initial auxiliary motor speed.

According to examples of the present disclosure, said additive manufacturing system is the system according to examples of the first aspect of the present disclosure.

Generally, methods according to the second aspect of the present disclosure may include steps corresponding to the features of the first aspect of the disclosure and may provide the same or similar advantages as systems according to the first aspect of the present disclosure.

A third aspect of the present disclosure relates to an auxiliary feeding assembly for an additive manufacturing system, the feeding assembly comprising an auxiliary feeding controller, the feeding controller comprising:
a filament accumulation input configured to receive an accumulation signal indicative of accumulation of filament along a feeding path of the additive manufacturing system;
an auxiliary motor output configured to provide a driving signal to an auxiliary motor arranged to translate the filament, the driving signal indicative of an auxiliary motor speed of the auxiliary motor speed; and
a control unit configured to operate the auxiliary motor by setting the driving signal provided by the auxiliary motor output,
wherein the control unit is further configured to:
operate the auxiliary motor at an initial auxiliary motor speed;
detect the accumulation of the filament via the accumulation signal while operating the auxiliary motor at the initial auxiliary motor speed; and
operating the auxiliary motor speed at a decreased auxiliary motor speed smaller than the initial auxiliary motor speed upon detecting the accumulation of the filament via the accumulation signal.

A feeding assembly comprising an auxiliary feeding controller as described in relation to the third aspect may for example be integrated into a conventional additive manufacturing system for fused deposition modelling to operate together with a printer controller thereof.

According to examples of the present disclosure, the feeding controller further comprises:
an extruder motor input configured to receive an extruder signal indicative of an extruder motor speed of an extruder motor,
wherein the initial auxiliary motor speed is based on the extruder signal such that the auxiliary motor translates filament at the same speed as the extruder motor.

According to examples of the present disclosure, the auxiliary feeding assembly further comprises the auxiliary motor arranged to translate the filament.

An auxiliary motor may thus be integrated into a conventional additive manufacturing system together with a feeding controller as part of a feeding assembly.

According to examples of the present disclosure, the auxiliary feeding assembly further comprises:
a filament accumulation sensing arrangement configured to detect the accumulation of the filament along the feeding path, wherein the sensing arrangement is configured to transmit the accumulation signal to the filament accumulation input.

A filament accumulation sensing arrangement may thus be integrated into a conventional additive manufacturing system together with a feeding controller as part of a feeding assembly.

### BRIEF DESCRIPTION OF THE DRAWINGS

Examples of the present disclosure will now be further described by reference to the accompanying drawings, in which:
Fig. 1 illustrates an additive manufacturing system according to the present disclosure,
Fig. 2 illustrates another additive manufacturing system according to the present disclosure,
Fig. 3a-d illustrate examples of a filament accumulation sensing arrangement according to the present disclosure,
Fig. 4 schematically illustrates method steps according to an example of the present disclosure,
Fig. 5 illustrates an example according to the present disclosure involving different filament sources, and
Fig. 6 illustrates another example according to the present disclosure involving different filament sources.

### DETAILED DESCRIPTION

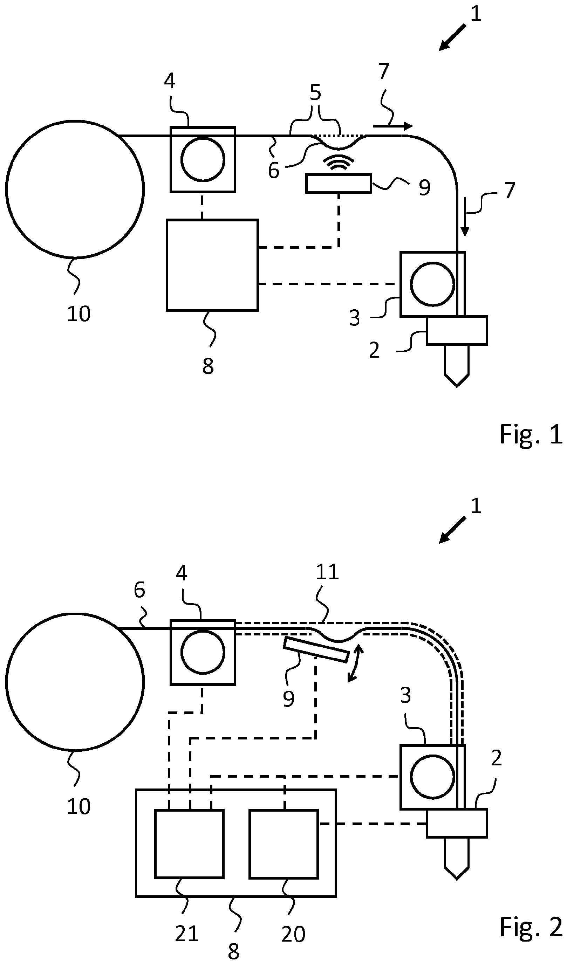

Fig. 1 illustrates an additive manufacturing system 1 according to the present disclosure.

The system 1 comprises a printhead 2 for heating and depositing filament 6 from a filament spool 10. Further, the printhead 2 is movable, preferably in at least two dimensions in a horizontal plane. Thereby, the printhead 2 can deposit the heated filament 6 onto a printing bed (not shown) to thereby additively manufacture an object (not shown). Either the printhead 2 or the printing bed may typically be moveable in a vertical direction. The printhead 2 is controlled by a system controlling arrangement 8. Such a controlling arrangement 8 may for example be implemented as a central processing unit or a programmable logic device in communication with a digital storage. The controlling arrangement 8 may further comprise additional units such as any number of programmable logic circuits, drivers (for motors or sensors), converters, etc. The system controlling arrangement may e.g., use standard hardware circuits, using software programs and data in conjunction with a suitably programmed digital microprocessor or a general-purpose computer e.g., an Arduino^{™} programmed with suitable computer code for enabling the functions described herein, and/or using applications specific integrated circuitry, e.g. using standard servo systems or step-motors. Software program instructions and data may be stored on a non-transitory, computerreadable storage medium, and when the instructions are executed by a computer or other suitable processor control, the computer or processor performs the functions associated with those instructions for performing the stated functions of the controlling arrangement.

The additive manufacturing system 1 further comprises both an extruder motor 3 and an auxiliary motor 4 arranged serially along a feeding path 5 for translating the filament 6 of the filament spool 10 to the printhead 2. The feeding path 5 has a feeding direction 7 towards the printhead 2, with the extruder motor 3 being arranged closer to the printhead 2 than the auxiliary motor 4.

The extruder motor 3 translates the filament 6 to feed it to the printhead 2 to extrude the filament during operation of the system 1. At the same time, the auxiliary motor 4 also translates the filament 6 forward along the feeding direction 7, typically at the same pace as the extruder motor 3.

The system controlling arrangement 8 is configured to control both motors 3, 4 during operation of the system 1.

Simultaneous serial translation with an extruder motor 3 and an auxiliary motor 4 can ensure efficient operation of large additive manufacturing systems 1 and operation of systems 1 using elastic filament 6.

The system 1 further comprises a filament accumulation sensing arrangement 9 configured to detect accumulation of the filament 6 along the feeding path between the auxiliary motor 4 and the extruder motor 3. Such accumulation may typically result in a transverse displacement of the filament 6, as indicated in Fig. 1 by the filament 6 being transversely displaced from the feeding path 5 near the sensing arrangement 9.

In this particular example, the filament accumulation sensing arrangement 9 is provided as a proximity sensor configured to detect changes in a signal emitted by the proximity sensor itself and reflected from the filament.

The system controlling arrangement 8 is configured to operate the additive manufacturing system 1 in a first operational state where the extruder motor 3 is controlled at an initial extruder motor speed and the auxiliary motor 4 is controlled at an initial auxiliary motor speed. In this state, the system is capable of at least partly manufacturing an object.

Upon detection of accumulation of filament 6 via an accumulation signal from the filament accumulation sensing arrangement 9, the controlling arrangement 8 switches from the first operational state into a second operational state in which the auxiliary motor 4 is controlled at a decreased auxiliary motor speed smaller than the initial auxiliary motor speed. In this example, the controlling arrangement 8 switches into the second operational state upon detecting a signal from the proximity sensor which is beyond a pre-set threshold.

The system controlling arrangement 8 proceeds operate the system 1 to manufacture the object while operating in the second operational state.

Upon detecting that the signal from the proximity sensor is not beyond the pre-set threshold anymore, the system switches back to the first operational state.

Thereby, any accumulation of filament 6 between the auxiliary motor 4 and the extruder motor 3 is efficiently counteracted.

Fig. 2 illustrates another additive manufacturing system 1 according to the present disclosure.

In comparison with the system illustrated in Fig. 1, the additive manufacturing system illustrated in Fig. 2 comprises a filament tube 11 forming an internal passageway extending in a lengthwise direction and accommodating the filament 6. Thereby, the tube 11 and the internal passageway defines at least a part of the feeding path. The tube 11 extends at least partly between the auxiliary motor 4 and the extruder motor 3.

Further, in this example, the filament accumulation sensing arrangement 9 is provided as a mechanical lever sensor. A lever of the lever sensor is configured to pivot around a pivotal axis when a torque is applied to this lever and the lever sensor then provides a signal depending on the angle by which the lever has been pivoted.

The filament tube 11 has gap through which the filament 6 can be transversely displaced. The lever sensor 9 is placed such that transversal displacement of the filament through this gap pivots the lever of the lever sensor 9, which provides an accumulation signal to the controlling arrangement 8 accordingly.

In addition, Fig. 2 also illustrates a system controlling arrangement comprising a separate printer controller 20 and a separate auxiliary feeding controller 21.

The printer controller 20 performs control of the conventional additive manufacturing, i.e., it operates the extruder motor 3 as well as the printhead 2 and motion thereof relative to a printing bed, for example motion in a Cartesian coordinate system.

The auxiliary feeding controller 21 controls the auxiliary motor 4 based on input from the filament accumulation sensing arrangement 9 and an extruder signal indicative of an extruder motor speed of the extruder motor 3.

When no accumulation is detected, the auxiliary feeding controller 21 simply operates the auxiliary motor 4 to mirror operation of the extruder motor 3. For example, if the extruder motor 3 and the auxiliary motor 4 are step-motors having similar or identical step sizes, then the auxiliary motor 4 is operated to take the same steps as the extruder motor 3.

When accumulation is detected, the feeding controller 21 can temporarily stop the auxiliary motor 4 or reduce the pace of steps.

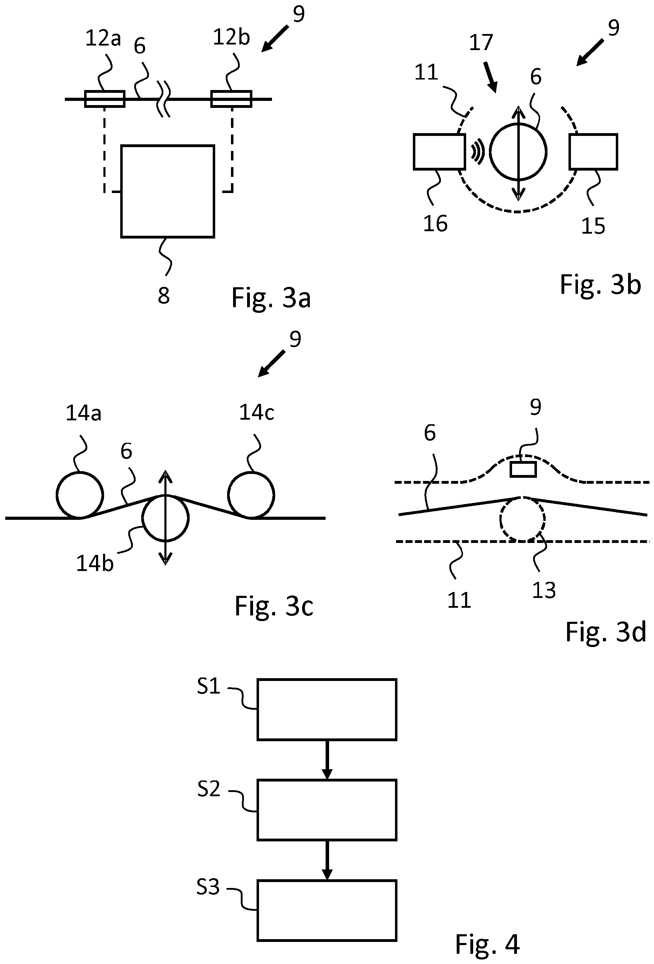

Fig. 3a-d illustrate examples of a filament accumulation sensing arrangement 9 according to the present disclosure.

In Fig. 3a, the filament accumulation sensing arrangement 9 is provided as a translation sensing arrangement comprising a first flow sensor 12a and a second flow sensor 12b. Each of these flow sensors 12a, 12b are configured to detect a local translation of the filament 6 along the feeding path, for example by means of a roller engaging with the filament 6, wherein flow of the filament 6 is detected by rotation of the roller.

In the present example, the two flow sensors 12a, 12b are communicatively connected to the controlling arrangement 8, which in turn is configured to detect a discrepancy between flow detected by the first flow sensor 12a and flow detected by the second flow sensor 12b.

Assuming that the second flow sensor 12b is located downstream relative to the first flow sensor 12a, a flow at the first flow sensor surpassing a flow at the second flow sensor may be indicative of accumulation of filament between these two flow sensors.

Detection of accumulation via flow sensors may be performed based on an instantaneous flow, i.e., that a flow at the first flow sensor surpasses a flow at the second flow sensor at a given moment by a threshold, or it may be performed based on a cumulative flow, i.e., that a total flow summarized or integrated across a duration of time from the first flow sensor surpasses that of a second flow sensor by a threshold.

In Fig. 3b, the filament accumulation sensing arrangement 9 is provided as an optical sensor 15, 16.

The present illustration provides a cross-sectional view of filament 6 in a filament tube 11 having a gap 17 through which the filament 6 can be transversely displaced. Transversal displacement of the filament 6 is indicated by an arrow.

The optical sensor comprises a light source 16 and a photodetector 15. The light source 16 emits electromagnetic radiation, and in turn, the photodetector 15 is configured to detect said electromagnetic radiation. A change in a quantity of light received by the photodetector 15 may be indicative of transversal displacement of the filament 6.

In Fig. 3c, the filament accumulation sensing arrangement 9 is provided as a tension meter. The tension meter exemplified in the present illustration comprises a first roller 14a, a second roller 14b and a third roller 14c sequentially engaging with the opposite sides of filament 6 travelling through the rollers 14a, 14b, 14c. The second roller is deflectable transversely to the filament as indicated by an arrow. The tension of the filament 6 affects this deflection, which in turn can be used to provide a signal indicative of accumulation of the filament, for example via a load cell. When filament accumulates, the tension will decrease.

In Fig. 3d, the filament accumulation sensing arrangement 9 is provided a mechanical push-button placed within the filament tube 11.

In this example, the filament tube 11 has a first section and a second section, wherein the second section has a greater cross-sectional diameter to host the mechanical push-button 9 and the transversal displacement of the filament 6. The second section further comprises a protruding element 13 protruding partially into the internal passageway of the filament tube 11.

The protruding element promotes accumulation of the filament into a local transverse displacement at this second section where the filament accumulation sensing arrangement is placed.

Fig. 4 schematically illustrates method steps S1-S3 according to an example of the present disclosure.

The method may be performed utilizing an additive manufacturing system as disclosed herein.

In a first step S1, the additive manufacturing system is operated in a first operational state to at least partly manufacture an object. The extruder motor is controlled at an initial extruder motor speed and the auxiliary motor is controlled at an initial auxiliary motor speed in this first operational state.

In a next step S2, an accumulation of filament is detected during operation of the system in this first operation state via an accumulation signal from a filament accumulation sensing arrangement.

In a next step S3, operation of the additive manufacturing system is switched from the first operational state to a second operational state upon detection of accumulation of the filament via the accumulation signal. In the second operational state, the extruder motor is controlled at an increased extruder motor speed greater than the initial extruder motor speed, and/or the auxiliary motor is controlled at a reduced auxiliary motor speed smaller than the initial auxiliary motor speed.

These steps may be facilitated by using the system controlling arrangement of the additive manufacturing system.

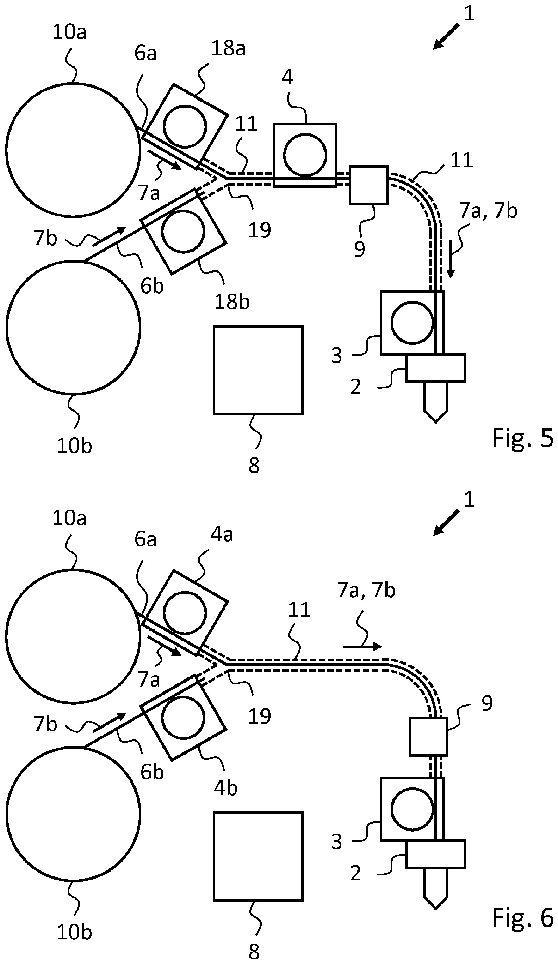

Fig. 5 illustrates an example according to the present disclosure involving different filament sources 10a, 10b. In the present example, these different filament sources are a first filament spool 10a supplying a first filament 6a, and a second filament spool 10b supplying a second filament.

In addition to an extruder motor 3 and an auxiliary motor 4, this example additionally comprises a first further motor 18a and a second further motor 18b for feeding first filament 6a from the first filament spool 10a and second filament 6b from the second filament spool 10b, respectively. Thereby, a first filament path 7a for the first filament 6a is formed by the first further motor 18a, the auxiliary motor 4, and the extruder motor 3, and a second filament path 7b for the second filament 6b is formed by the second further motor 18b, the auxiliary motor 4, and the extruder motor 3. The two filament paths 7a, 7b merge in a merging point 19 prior to the auxiliary motor. Filament tubes 11 further forms the feeding paths 7a, 7b.

When the first filament spool 10a is used as filament source, the first further motor 18a feeds the first filament 6a to the auxiliary motor 4, which in turn feeds this filament to the extruder motor 3. When the second filament spool 10b is used as filament source, the second further motor 18b feeds the second filament 6b to the auxiliary motor 4, which in turn feeds this filament to the extruder motor 3. Typically, one filament source is used at a time.

The filament accumulation sensing arrangement 9 is configured to detect accumulation of filament between the auxiliary motor 4 and the extruder motor 3. Thereby, the sensing arrangement 9 can detect accumulation of filament independently of which filament source is currently being used.

Further, the controlling arrangement 8 can switch from a first operational state to a second operational state in which the extruder motor 3 is controlled at an increased extruder motor speed and/or in which the auxiliary motor 4 is controlled at a decreased auxiliary motor speed independently of which filament source is currently being used.

In case the auxiliary motor 4 is controlled at a decreased auxiliary motor speed, the motor speed of the first further motor 10a or the motor speed of the second further motor 10b may also be decreased accordingly.

Said further motors 18a, 18b can also be controlled by the system controlling arrangement 8.

That filament from a source runs out may, for example, be detected by means of a presence sensor. Generally, several of the filament accumulation sensing arrangements disclosed herein may also be utilized as presence sensors. When filament from, e.g., the first filament spool 10a runs out, the first further motor 19a may terminate operation and the second further motor 18b may initiate operation. The initial operation of the second further motor 18b may be at a greater translation speed than the extruder motor 3 to ensure that the front end of the second filament 6b can catch up with the back end of the first filament 6a.

Fig. 6 illustrates another example according to the present disclosure involving different filament sources.

In comparison with the system illustrated in Fig. 5, the additive manufacturing system illustrated in Fig. 6 comprises a first auxiliary motor 4a and a second auxiliary motor 4b instead of a single auxiliary motor and two further motors. The first filament path 7a for the first filament 6a is formed by the first auxiliary motor 4a and the extruder motor 3, and the second filament path 7b for the second filament 6b is formed by the second auxiliary motor 4b and the extruder motor 3. The two filament paths 7a, 7b merge in a merging point 19 between the auxiliary motors 4a, 4b and the extruder motor 3. Filament tubes 11 further forms the feeding paths 7a, 7b.

When the first filament spool 10a is used as filament source, the first auxiliary motor 4 feeds this filament to the extruder motor 3, and when the second filament spool 10b is used as filament source, the second auxiliary motor 4 feeds this filament to the extruder motor 3. Typically, one filament source is used at a time.

Moreover, when the first filament spool 10a is used as a filament source and no accumulation is detected, the controlling arrangement 8 operates the system in the first operational state as described previously. If accumulation is then detected, the system switched into the second operational state.

When the second filament spool 10b is used as a filament source and no accumulation is detected, the controlling arrangement 8 operates the system in a third operational state. In this state, the extruder motor is controlled at an initial extruder motor speed and the second auxiliary motor 4b is controlled at a second initial auxiliary motor speed. If accumulation is then detected, the system switches into a fourth operational state in which the extruder motor is controlled at the increased extruder motor speed greater than the initial extruder motor speed, and/or the second auxiliary motor is controlled at a second decreased auxiliary motor speed smaller than the second initial auxiliary motor speed.

Moreover, Figs. 5 and 6 illustrate that a filament accumulation sensing arrangement 9 can be located freely along the feeding path, for example closer to the extruder motor 3, or closer to an auxiliary motor 4, 4a, 4b.

### List of figure references:

- 1: additive manufacturing system
- 2: printhead
- 3: extruder motor
- 4: auxiliary motor
- 5: feeding path
- 6: filament
- 7: feeding direction
- 8: system controlling arrangement
- 9: filament accumulation sensing arrangement
- 10: filament spool
- 11: filament tube
- 12: flow sensor
- 13: protruding element
- 14: roller
- 15: photodetector
- 16: light source
- 17: gap
- 18: further motor
- 19: merging point
- 20: printer controller
- 21: auxiliary feeding controller

### LIST OF NUMBERED EMBODIMENTS

1. An additive manufacturing system for fused deposition modelling, the system comprising:
   a printhead for heating and depositing filament;
   an extruder motor arranged to translate the filament;
   an auxiliary motor arranged to translate the filament;
   a feeding path for the filament, the feeding path having a feeding direction towards the printhead, wherein the feeding path is at least formed by the extruder motor and the auxiliary motor such that the extruder motor is closer to the printhead than the auxiliary motor relative to the feeding direction of the feeding path; and
   a system controlling arrangement configured to control the extruder motor and the auxiliary motor to translate the filament towards the printhead during operation of the additive manufacturing system,

   wherein the additive manufacturing system further comprises:
      a filament accumulation sensing arrangement configured to detect accumulation of the filament along the feeding path between the auxiliary motor and the extruder motor, wherein the sensing arrangement is configured to transmit an accumulation signal to the system controlling arrangement,
   wherein the system controlling arrangement is further configured to:
      operate the additive manufacturing system in a first operational state to at least partly manufacture an object, wherein the extruder motor is controlled at an initial extruder motor speed and the auxiliary motor is controlled at an initial auxiliary motor speed in the first operational state;
      detect the accumulation of the filament via the accumulation signal during operation of the system in the first operational state; and
      switch from the first operational state to a second operational state upon detecting the accumulation of the filament via the accumulation signal, wherein, in the second operational state:
         the extruder motor is controlled at an increased extruder motor speed greater than the initial extruder motor speed; and/or
         the auxiliary motor is controlled at a decreased auxiliary motor speed smaller than the initial auxiliary motor speed.
2. The additive manufacturing system according to embodiment 1, wherein the accumulation of the filament detected by the sensing arrangement is associated with a transverse displacement of the filament, the transverse displacement being transverse to the feeding path.
3. The additive manufacturing system according to any of the preceding embodiments, wherein the sensing arrangement is:
   a filament displacement sensor configured to measure the transverse displacement at a position along the feeding path between the auxiliary motor and the extruder motor;
   a tension meter configured to detect the accumulation of the filament along the feeding path by measuring a reduction of a tension in the filament along the feeding path; or
   a translation sensing arrangement configured to detect a discrepancy of translation of the filament between two locations along the feeding path.
4. The additive manufacturing system according to embodiment 3, wherein the filament displacement sensor is:
   a mechanical sensor, such as a push-button or a lever sensor;
   an optical sensor;
   a proximity sensor; or
   a combination thereof.
5. The additive manufacturing system according to any of the preceding embodiments, wherein the system comprises at least one filament tube forming an internal passageway extending in a lengthwise direction for accommodating the filament, the internal passageway defining at least a part of the feeding path.
6. The additive manufacturing system according to any of embodiment 5, wherein the tube forms a first section and a second section, wherein the second section is arranged to facilitate the transverse displacement by having a gap in the tube, a cavity in the tube, or a greater cross-sectional diameter than the first section, wherein the filament displacement sensor is placed in the second section.
7. The additive manufacturing system according to any of embodiments 5-6, wherein the second section comprises a protruding element protruding partially into the internal passageway from a perimeter of the tube, the protruding element arranged to locally deflect the filament within the internal passageway to thereby promote the accumulation of the filament into a transverse displacement at the protruding element, wherein the displacement sensor is located at the protruding element.
8. The additive manufacturing system according to embodiment 5, wherein the filament displacement sensor is arranged outside the tube to measure the transverse displacement of a section of the filament being outside the tube.
9. The additive manufacturing system according to any of the preceding embodiments, wherein the controlling arrangement is further configured to:
   adjust operation by decreasing the increased extruder motor speed, and/or by increasing the decreased auxiliary motor speed, wherein the operation is adjusted based on:
   detecting a reduction of or a termination of the accumulation of the filament via the accumulation signal; and/or
   a pre-set duration of the second operational state.
10. The additive manufacturing system according to embodiment 9, wherein the controlling arrangement is further configured to adjust operation by decreasing the increased extruder motor speed, and/or by increasing the decreased auxiliary motor speed to revert from the second operational state to the first operational state.
11. The additive manufacturing system according to embodiment 9, wherein the accumulation signal is measured successively to consecutively adjust operation of the increased extruder motor speed and/or adjust operation of the decreased auxiliary motor speed.
12. The additive manufacturing system according to any of the preceding embodiments, wherein the feeding path is a first feeding path, wherein the system further comprises:
   a second feeding path formed at least by the extruder motor, the second feeding path having a feeding direction towards the printhead, wherein the first feeding path and the second feeding path are arranged to facilitate feeding of filament to the printhead from different filament sources, wherein the first feeding path and the second feeding path merge in a merging point prior to the extruder motor.
13. The additive manufacturing system according to embodiment 12, wherein the displacement sensor or the tension meter is located after the merging point relative to the feeding direction of the first feeding path and the feeding direction of the second feeding path.
14. The additive manufacturing system according to any of embodiments 12-13, wherein the controlling arrangement is further configured to:
   detect a termination of filament supply via the first feeding path and to initiate filament feeding of filament supply via the second feeding path based on said termination of filament supply via the first feeding path.
15. The additive manufacturing system according to any of embodiments 12-14, wherein the controlling arrangement is further configured to:
   detect a discrepancy of translation of the filament between a first location and a second location along the first feeding path arising from a lack of filament at the first location, the first location being located before the second location relative to the feeding direction along the first feeding path; and
   temporarily translate filament along the second feeding path with a translation speed greater than a translation speed of the extruder motor for a duration which is based on the discrepancy of translation detected from the lack of filament at the first location.
16. The additive manufacturing system according to any of embodiments 12-15, wherein the system comprises at least one presence sensor arranged to measure a presence of filament along the first feeding path, wherein the termination of filament supply via the first feeding path is detected via the presence sensor.
17. The additive manufacturing system according to embodiment 16, wherein the presence sensor is arranged before the merging point relative to the feeding direction of the first feeding path.
18. The additive manufacturing system according to any of embodiments 12-17, wherein the second feeding path is further formed by at least the auxiliary motor, wherein the first feeding path and the second feeding path merge in the merging point prior to the extruder motor.
19. The additive manufacturing system according to any of embodiments 12-17, wherein the auxiliary motor is a first auxiliary motor, wherein the system further comprises:
   a second auxiliary motor arranged to translate the filament, wherein the second feeding path is further formed by at least the second auxiliary motor such that the extruder motor is closer to the printhead than the second auxiliary motor relative to the feeding direction of the second feeding path, wherein the second auxiliary motor is located prior to the merging point relative to the feeding direction of the second feeding path.
20. The additive manufacturing system according to embodiment 19, wherein the controlling arrangement is further configured to:
   operate the additive manufacturing system in a third state of operation, wherein the extruder motor is controlled at the initial extruder motor speed and the second auxiliary motor is controlled at a second initial auxiliary motor speed; and
   switch from the third operational state to a fourth operational state upon detecting the accumulation of the filament via the accumulation signal, wherein, in the fourth operational state:
      the extruder motor is controlled at the increased extruder motor speed greater than the initial extruder motor speed; and/or
      the second auxiliary motor is controlled at a second decreased auxiliary motor speed smaller than the second initial auxiliary motor speed.
21. The additive manufacturing system according to any of the preceding embodiments, wherein the additive manufacturing system comprises a filament spool holding the filament and from which the filament is fed to the feeding path.
22. The additive manufacturing system according to any of the preceding embodiments, wherein the filament has a hardness of at most 110A on the Shore hardness scale, for example at most 100A, such as at most 95A.
23. The additive manufacturing system according to any of the preceding embodiments, wherein the filament is thermoplastic polyurethane.
24. The additive manufacturing system according to any of the preceding embodiments, wherein the object is a seat or a backrest for a person.
25. The additive manufacturing system according to any of the preceding embodiments, wherein the object has mass of at least 1.0 kg after being printed, for example of at least 1.5 kg, such as of at least 2.0 kg.
26. The additive manufacturing system according to any of the preceding embodiments, wherein the system comprises a printing bed, wherein the object has a cross-sectional area of at least 0.10 square meter, for example at least 0.15 square meters, such as at least 0.20 square meters.
27. The additive manufacturing system according to any of the preceding embodiments, wherein the system controlling arrangement comprises:
   a printer controller configured to control the printhead and the extruder motor; and
   an auxiliary feeding controller configured to control the auxiliary motor.
28. A method for additively manufacturing at least a part of an object by fused deposition modelling using an additive manufacturing system, the system comprising:
   a printhead for heating and depositing filament;
   an extruder motor arranged to translate the filament;
   an auxiliary motor arranged to translate the filament;
   a feeding path for the filament, the feeding path having a feeding direction towards the printhead, wherein the feeding path is at least formed by the extruder motor and the auxiliary motor such that the extruder motor is closer to the printhead than the auxiliary motor relative to the feeding direction of the feeding path;
   a system controlling arrangement configured to control the extruder motor and the auxiliary motor to translate the filament towards the printhead during operation of the additive manufacturing system; and
   a filament accumulation sensing arrangement configured to detect accumulation of the filament along the feeding path between the auxiliary motor and the extruder motor, wherein the sensing arrangement is configured to transmit an accumulation signal to the system controlling arrangement,
   wherein the method comprises the steps of:
   operating the additive manufacturing system in a first operational state to at least partly manufacture the object, wherein the extruder motor is controlled at an initial extruder motor speed and the auxiliary motor is controlled at an initial auxiliary motor speed in the first operational state;
   detecting the accumulation of the filament via the accumulation signal during the operation of the system in the first operational state; and
   switch operation of the additive manufacturing system from the first operational state to a second operational state upon detecting the accumulation of the filament via the accumulation signal, wherein, in the second operational state:
      the extruder motor is controlled at an increased extruder motor speed greater than the initial extruder motor speed; and/or
      the auxiliary motor is controlled at a reduced auxiliary motor speed smaller than the initial auxiliary motor speed.
29. The method according to embodiment 28, wherein said additive manufacturing system is the system according to any of embodiments 1-27.
30. An auxiliary feeding assembly for an additive manufacturing system, the feeding assembly comprising an auxiliary feeding controller, the feeding controller comprising:
   a filament accumulation input configured to receive an accumulation signal indicative of accumulation of filament along a feeding path of the additive manufacturing system;
   an auxiliary motor output configured to provide a driving signal to an auxiliary motor arranged to translate the filament, the driving signal indicative of an auxiliary motor speed of the auxiliary motor speed; and
   a control unit configured to operate the auxiliary motor by setting the driving signal provided by the auxiliary motor output,
   wherein the control unit is further configured to:
   operate the auxiliary motor at an initial auxiliary motor speed;
   detect the accumulation of the filament via the accumulation signal while operating the auxiliary motor at the initial auxiliary motor speed; and
   operating the auxiliary motor speed at a decreased auxiliary motor speed smaller than the initial auxiliary motor speed upon detecting the accumulation of the filament via the accumulation signal.
31. The feeding assembly according to embodiment 30, wherein the feeding controller further comprises:
   an extruder motor input configured to receive an extruder signal indicative of an extruder motor speed of an extruder motor,
   wherein the initial auxiliary motor speed is based on the extruder signal such that the auxiliary motor translates filament at the same speed as the extruder motor.
32. The feeding assembly according to any of embodiments 30-31, wherein the auxiliary feeding assembly further comprises the auxiliary motor arranged to translate the filament.
33. The feeding assembly according to any of embodiments 30-32, wherein the auxiliary feeding assembly further comprises:
   a filament accumulation sensing arrangement configured to detect the accumulation of the filament along the feeding path, wherein the sensing arrangement is configured to transmit the accumulation signal to the filament accumulation input.

## Claims

1. An additive manufacturing system (1) for fused deposition modelling, the system comprising:
a printhead (2) for heating and depositing filament (6);
an extruder motor (3) arranged to translate the filament (6);
an auxiliary motor (4) arranged to translate the filament (6);
a feeding path (5) for the filament (6), the feeding path (5) having a feeding direction (7) towards the printhead (2), wherein the feeding path (5) is at least formed by the extruder motor (3) and the auxiliary motor (4) such that the extruder motor (3) is closer to the printhead (2) than the auxiliary motor (4) relative to the feeding direction (7) of the feeding path (5); and
a system controlling arrangement (8) configured to control the extruder motor (3) and the auxiliary motor (4) to translate the filament (6) towards the printhead (2) during operation of the additive manufacturing system (1),
wherein the additive manufacturing system (1) further comprises:
a filament accumulation sensing arrangement (9) configured to detect accumulation of the filament (6) along the feeding path (5) between the auxiliary motor (4) and the extruder motor (3), wherein the sensing arrangement (9) is configured to transmit an accumulation signal to the system controlling arrangement (8),
wherein the system controlling arrangement (8) is further configured to:
operate the additive manufacturing system (1) in a first operational state to at least partly manufacture an object, wherein the extruder motor (3) is controlled at an initial extruder motor speed and the auxiliary motor is controlled at an initial auxiliary motor speed (4) in the first operational state;
detect the accumulation of the filament (6) via the accumulation signal during operation of the system (1) in the first operational state; and
switch from the first operational state to a second operational state upon detecting the accumulation of the filament (6) via the accumulation signal, wherein, in the second operational state:
the extruder motor (3) is controlled at an increased extruder motor speed greater than the initial extruder motor speed; and/or
the auxiliary motor (4) is controlled at a decreased auxiliary motor speed smaller than the initial auxiliary motor speed.

2. The additive manufacturing system according to claim 1, wherein the accumulation of the filament detected by the sensing arrangement is associated with a transverse displacement of the filament, the transverse displacement being transverse to the feeding path.

3. The additive manufacturing system according to any of the preceding claims, wherein the sensing arrangement is:
a filament displacement sensor configured to measure the transverse displacement at a position along the feeding path between the auxiliary motor and the extruder motor;
a tension meter configured to detect the accumulation of the filament along the feeding path by measuring a reduction of a tension in the filament along the feeding path; or
a translation sensing arrangement configured to detect a discrepancy of translation of the filament between two locations along the feeding path.

4. The additive manufacturing system according to claim 3, wherein the filament displacement sensor is:
a mechanical sensor, such as a push-button or a lever sensor;
an optical sensor;
a proximity sensor; or
a combination thereof.

5. The additive manufacturing system according to any of the preceding claims, wherein the system comprises at least one filament tube forming an internal passageway extending in a lengthwise direction for accommodating the filament, the internal passageway defining at least a part of the feeding path.

6. The additive manufacturing system according to any of claim 5, wherein the tube forms a first section and a second section, wherein the second section is arranged to facilitate the transverse displacement by having a gap in the tube, a cavity in the tube, or a greater cross-sectional diameter than the first section, wherein the filament displacement sensor is placed in the second section.

7. The additive manufacturing system according to any of the preceding claims, wherein the controlling arrangement is further configured to:
adjust operation by decreasing the increased extruder motor speed, and/or by increasing the decreased auxiliary motor speed, wherein the operation is adjusted based on:
detecting a reduction of or a termination of the accumulation of the filament via the accumulation signal; and/or
a pre-set duration of the second operational state.

8. The additive manufacturing system according to claim 7, wherein the accumulation signal is measured successively to consecutively adjust operation of the increased extruder motor speed and/or adjust operation of the decreased auxiliary motor speed.

9. The additive manufacturing system according to any of the preceding claims, wherein the feeding path is a first feeding path, wherein the system further comprises:
a second feeding path formed at least by the extruder motor, the second feeding path having a feeding direction towards the printhead, wherein the first feeding path and the second feeding path are arranged to facilitate feeding of filament to the printhead from different filament sources, wherein the first feeding path and the second feeding path merge in a merging point prior to the extruder motor.

10. The additive manufacturing system according to claim 9, wherein the controlling arrangement is further configured to:
detect a discrepancy of translation of the filament between a first location and a second location along the first feeding path arising from a lack of filament at the first location, the first location being located before the second location relative to the feeding direction along the first feeding path; and
temporarily translate filament along the second feeding path with a translation speed greater than a translation speed of the extruder motor for a duration which is based on the discrepancy of translation detected from the lack of filament at the first location.

11. The additive manufacturing system according to any of claims 9-10, wherein the second feeding path is further formed by at least the auxiliary motor, wherein the first feeding path and the second feeding path merge in the merging point prior to the extruder motor.

12. The additive manufacturing system according to any of claims 9-10, wherein the auxiliary motor is a first auxiliary motor, wherein the system further comprises:
a second auxiliary motor arranged to translate the filament, wherein the second feeding path is further formed by at least the second auxiliary motor such that the extruder motor is closer to the printhead than the second auxiliary motor relative to the feeding direction of the second feeding path, wherein the second auxiliary motor is located prior to the merging point relative to the feeding direction of the second feeding path.

13. The additive manufacturing system according to claim 12, wherein the controlling arrangement is further configured to:
operate the additive manufacturing system in a third state of operation, wherein the extruder motor is controlled at the initial extruder motor speed and the second auxiliary motor is controlled at a second initial auxiliary motor speed; and
switch from the third operational state to a fourth operational state upon detecting the accumulation of the filament via the accumulation signal, wherein, in the fourth operational state:
the extruder motor is controlled at the increased extruder motor speed greater than the initial extruder motor speed; and/or
the second auxiliary motor is controlled at a second decreased auxiliary motor speed smaller than the second initial auxiliary motor speed.

14. A method for additively manufacturing at least a part of an object by fused deposition modelling using an additive manufacturing system, the system comprising:
a printhead for heating and depositing filament;
an extruder motor arranged to translate the filament;
an auxiliary motor arranged to translate the filament;
a feeding path for the filament, the feeding path having a feeding direction towards the printhead, wherein the feeding path is at least formed by the extruder motor and the auxiliary motor such that the extruder motor is closer to the printhead than the auxiliary motor relative to the feeding direction of the feeding path;
a system controlling arrangement configured to control the extruder motor and
the auxiliary motor to translate the filament towards the printhead during operation of the additive manufacturing system; and
a filament accumulation sensing arrangement configured to detect accumulation of the filament along the feeding path between the auxiliary motor and the extruder motor, wherein the sensing arrangement is configured to transmit an accumulation signal to the system controlling arrangement,
wherein the method comprises the steps of:
operating the additive manufacturing system in a first operational state to at least partly manufacture the object, wherein the extruder motor is controlled at an initial extruder motor speed and the auxiliary motor is controlled at an initial auxiliary motor speed in the first operational state;
detecting the accumulation of the filament via the accumulation signal during the operation of the system in the first operational state; and
switch operation of the additive manufacturing system from the first operational state to a second operational state upon detecting the accumulation of the filament via the accumulation signal, wherein, in the second operational state:
the extruder motor is controlled at an increased extruder motor speed greater than the initial extruder motor speed; and/or
the auxiliary motor is controlled at a reduced auxiliary motor speed smaller than the initial auxiliary motor speed.

15. An auxiliary feeding assembly for an additive manufacturing system, the feeding assembly comprising an auxiliary feeding controller, the feeding controller comprising:
a filament accumulation input configured to receive an accumulation signal indicative of accumulation of filament along a feeding path of the additive manufacturing system;
an auxiliary motor output configured to provide a driving signal to an auxiliary motor arranged to translate the filament, the driving signal indicative of an auxiliary motor speed of the auxiliary motor speed; and
a control unit configured to operate the auxiliary motor by setting the driving signal provided by the auxiliary motor output,
wherein the control unit is further configured to:
operate the auxiliary motor at an initial auxiliary motor speed;
detect the accumulation of the filament via the accumulation signal while operating the auxiliary motor at the initial auxiliary motor speed; and
operating the auxiliary motor speed at a decreased auxiliary motor speed smaller than the initial auxiliary motor speed upon detecting the accumulation of the filament via the accumulation signal.
